Europäisches Patentamt

European Patent Office

Office européen des brevets

(11) Publication number: **0 246 205**
**A1**

(12) **EUROPEAN PATENT APPLICATION**

(21) Application number: **87850028.9**

(22) Date of filing: **28.01.87**

(51) Int. Cl.³: **F 42 B 13/02**

(30) Priority: **29.01.86 SE 8600381**

(43) Date of publication of application:
**19.11.87 Bulletin 87/47**

(84) Designated Contracting States:
**BE CH DE ES FR GB IT LI NL**

(71) Applicant: **Aktiebolaget Bofors**

**S-691 80 Bofors(SE)**

(72) Inventor: **Fixell, Jan-Olov**
**Trestegsvägen 7**
**S-691 54 Karlskoga(SE)**

(72) Inventor: **Gustafsson, Thomas**
**Drostvägen 14B**
**S-691 33 Karlskoga(SE)**

(72) Inventor: **Högberg, Gösta**
**Saxlyckevägen 52**
**S-691 52 Karlskoga(SE)**

(72) Inventor: **Engfors, Stig**
**Stamparebacken 16A**
**S-691 53 Karlskoga(SE)**

(72) Inventor: **Albrektsson, Kjell**
**Bergsmansgatan 56A**
**S-691 32 Karlskoga(SE)**

(72) Inventor: **Franzén, Arne**
**Stolpetorpsvägen 124**
**S-691 54 Karlskoga(SE)**

(74) Representative: **Olsson, Gunnar**
**Nobel Corporate Services Patents and Trademarks**
**S-691 80 Bofors(SE)**

(54) **Projectile construction for reducing impact spread.**

(57) The disclosure relates to a method and an apparatus for reducing the spread of hit pattern for a rotationally-stabilized ammunition unit in the form of a projectile, shell or the like (1) which is discharged in a ballistic trajectory from, for example, an artillery piece towards a target which is to be combated. By dynamic balancing of the shell (1) a reduction will be affected to the air resistance between different shells, hit probability being increased. According to the present invention, the inclination between the main axis of inertia of the shell and the geometric axis of the shell case are measured, whereafter these axes are set in parallel in that an adjustment weight (2) is mounted on one side of the point of gravity of the shell seen in its longitudinal direction. The adjustment weight (2) preferably consists of a disk or washer provided with an eccentric recess (4) for suitable weight and mass eccentricity.

Fig. 1

EP 0 246 205 A1

Case: 2872

# TITLE MODIFIED
## see front page

| | |
|---|---|
| APPLICANT: | AB BOFORS, BOFORS |
| ATTORNEY: | GUNNAR OLSSON |
| INVENTOR: | |
| TITLE OF INVENTION: | A METHOD AND APPARATUS FOR REDUCING PROJECTILE SPREAD |

## TECHNICAL FIELD

The present invention relates to a method and an apparatus apparatus for reducing the spread of a hit pattern for a rotationally-stabilized ammunition unit in the form of a projectile, shell or the like, discharged in a ballistic trajectory from a launching device towards a target to be combated. The invention entails dynamic balancing of the shell in order to reduce differences in air resistance between different shells so as to improve hit probability.

## BACKGROUND ART

It is previously known in the gunnery art to subject shells to QA inspection and to rectify any thereby ascertained imbalances by the addition of weights or by machining off excess material such that a main axis of inertia coincides with the geometric axis of the shell surface, to eliminate, by such means, deficiencies in the product. Oblique deviations between the geometric axis and the trajectory of the projectile will thereby be avoided, as a result of which variations in air resistance between different shells will be reduced thereby also reducing the spread of shots in a hit pattern.

One drawback inherent in the prior art method is in the difficulty entailed in mechanical rectification of the shell proper as required by the balancing operation without occasioning any further reduction in the overall quality of the finished shell. For example, no modification can be made to the shell casing without resulting in changes to its air resistance. Within the shell, account must be taken of extant devices, for example such that on explosive charge must, for reasons of safety, be enclosed in an unbroken and smooth-walled cavity. Moreover, adjustment must be affected at two positions on the shell on either side of its point of gravity, seen in the longitudinal direction - or line of trajectory - of the shell.

OBJECT OF THE PRESENT INVENTION

The object of the present invention is to realize a method and an apparatus for balancing rotationally-stabilized ammunition units and thereby reducing the spread of shots in a hit pattern without the necessity of interfering in any way with sensitive parts which are vital to the function of such ammunition units. The inventive concept as herein disclosed is based on measurement of the imbalance of the shell in a balancing apparatus and rectification of the ammunition unit at a combined site of inspection and rectification. The axis of rotation of the unit and its geometric axis may then be set in parallel, in which event the unit, on discharge, will follow a slightly helical trajectory. The angle of pitch of the helix is of the order of magnitude of between 0 and 1 degree in the centre of gravity of the projectile and, in practice, the same result will be attained using the method and apparatus according to the present invention as has previously been attained using the prior art method. The balancing apparatus proper may be of per se known type and will not, therefore, be described in greater detail.

Adjustment of the projectile may be affected using an adjustment weight which also possesses other functions, for example weight adjustment of the projectile in order further to improve the hit pattern, driving band or aerodynamic head.

BRIEF DESCRIPTION OF THE ACCOMPANYING DRAWINGS

The nature of the present invention and its aspects will be more readily understood from the following brief description of the accompanying drawings, and discussion of one preferred embodiment of the present invention relating thereto.

And (c) such color filter lacks water resistance, whereby washing the filter with an aqueous solution becomes difficult, it being thus likely that the display performance quality of the liquid crystal is deteriorated by stains. Further, (d) the color filter lacks resistance to weathering, and (e) the manufacturing process for it is complicated. For these reasons, color filters produced by the photolithography method have not satisfactorily met user's needs.

Another construction of a color filter of the type is known which incorporates aluminum oxide layers. For example, one such color filter comprises aluminum oxide anode layers formed in the interior of a transparent substrate, the anode layers being colored (Japanese Published Unexamined Patent Application Nos. 53 - 99822 and 53 - 110379), and another comprises porous layers formed by deposition on the interior of a transparent substrate, the porous layers each having a coloring material deposited thereon (Japanese Published Unexamined Patent Application No. 55 - 166607).

However, these color filters have critical drawbacks in that (a) they have no transparency and that (b) they have poor dye affinity. Therefore, neither of them has been put into practical application.

In view of these facts, the present inventors made extensive studies in an attempt to overcome the difficulties with color filters produced by aforesaid photolithography technique and to provide a color filter which could be put to practical use. As a result, they developed, as their previous invention, a color filter comprising active film layers formed of a colloidal alumina and a colloidal silica the film layers being dyed (see Japanese Patent Application No. 59 - 97210, laid open to public inspection on December 14, 1986 under Japanese Published Unexamined Patent Application No. 60 - 254001). This color filter is produce by repeating, according to the number of colors required, a process which comprises the step of forming on a transparen substrate an active film layer comprised of at least one or more of active alumina or active silica and then mounting o the active layer a metal mask having specified pattern holes, the step of mounting on the metal mask a transfer sheet having an ink layer containing a sublimatable dye and/or a hot-melt vaporizable dye, the step of heating unde normal pressure to cause the dye in the ink layer to migrat in vapor state to the active film layer so that the film layer is dyed, and the step of removing the transfer sheet and the metal mask, thereby sequentially forming the active film layer patterns corresponding to the pattern holes in the metal mask, finally forming an overcoat layer for closing from above the fine holes in the active film layer.

The color filter produced by this method eliminates aforesaid various drawbacks of the conventional color filters, but involves another set of problems as stated below. That is, since a metal mask is interposed between the transparent substrate and the transfer sheet, it is necessary that the dye be vaporized so as to be allowed to jump a distance corresponding to the thickness of the metal mask, instead of the method of contact migration as in conventional transfer printing. Therefore, the dye requires sufficient considerable energy (heat and time) to overcome the air resistance involved. Accordingly, a considerable amount of deformation due to the expansion of the metal mask is likely to develop, the performance accuracy of the color filter being thereby adversely affected. Another problem is that since the dye used must be readily vaporizable, the range of dye selection is limited, which fact renders it impracticable to use dyes having excellent dyeing power and good heat stability, naturally leading to lowered performance characteristics of the color filter.

One conceivable approach toward solving these problems might be to use a metal mask having less film thickness. However, it was found that this would involve breakage of the metal mask due to its deficiency in strength and would be undesirable from the standpoint of durability.

Then, after their further research into the possibilities of solving aforesaid problems with the prior-art methods, and by improving the foregoing method, which may be called the metal mask method, the present inventors have now arrived at the present invention, overcoming the difficulties with the prior art.

The object of the present invention is to provide a color filter having excellent properties, such as smoothness, heat resistance, water resistance, and light-resistance, and fine patterns with excellent spectral properties for three colors, red (R), green (G), and blue (B), and capable of being manufactured in an easy process, and a method for manufacturing the same.

## DISCLOSURE OF THE INVENTION

Aforesaid object is accomplished in accordance with the various features of the invention as stated below. The method of manufacturing a high-property, high-precision color filter according to the invention comprises the step of forming on a transparent substrate an active film layer comprised of at least one or more of active alumina or active silica and mounting on said active film layer a metal mask having specified pattern holes, the step of mounting or said metal mask a transfer sheet having an ink layer containing a heat migrating dye, or an ink layer containing a sublimatable dye and/or a hot-melt vaporizable dye, the step of migrating said dye in said ink layer in a vapor state to said active film layer by heating for dyeing said film layer, and the step of removing said transfer sheet and said metal mask, repeating said steps sequentially according to the number of colors required, thereby forming sequentially on said active film layer patterns

WHAT WE CLAIM AND DESIRE TO SECURE BY LETTERS PATENT IS:

1. A method of reducing the spread of shots in a hit pattern for a rotationally-stabilized ammunition unit in the form of a projectile, shell or the like discharged in a ballistic trajectory from a launching device towards a target which is to be combated, by dynamic balancing of the shell in order to reduce the differences in air resistance between different shells for the purposes of increasing hit probability, characterized in that the inclination between the main axis of the inertia of the shell and the geometric axis of the shell case is measured, whereafter said axes are set in parallel by a weight adjustment on one side of the point of gravity of the shell seen in its longitudinal direction, preferably in the rear region of the shell.

2. The method as claimed in Claim 1, characterized in that an adjustment weight (2) is mounted at the rear plane of the shell.

3. The method as claimed in Claim 1, characterized in that an adjustment weight (2) is mounted in the tracer cartridge (3) of the shell and may constitute retaining means for the igniter of the tracer cartridge.

4. The method as claimed in Claim 2 or 3, characterized in that apart from said adjustment of the imbalance of the shell, said adjustment weight (2) is also employed for adjusting the weight of the shell.

5. The method as claimed in Claim 4, characterized in that suitable weight and mass eccentricity are calculated for the shell, whereafter a suitable adjustment weight (2) is selected from a set of calibrated weights of different mass and mass eccentricity.

6. An apparatus for carrying out the method according to Claim 1 for reducing the spread of a hit pattern for a rotationally- stabilized ammunition unit in the form of a projectile, shell or the like, discharged in a ballistic trajectory from a launching device towards a target which is to be combated, by dynamic balancing of the shell in order to reduce the difference In the accompanying drawings:

Fig. 1 illustrates a shell with a welded rectification weight in the form of a recessed disk;

Fig. 2 is another view of the disk of Fig. 1; and

Fig. 3 and 4 are illustrations corresponding to those in Fig. 1 and 2, but in these Figures the shell has been provided with a tracer cartridge.

DESCRIPTION OF PREFERRED EMBODIMENTS

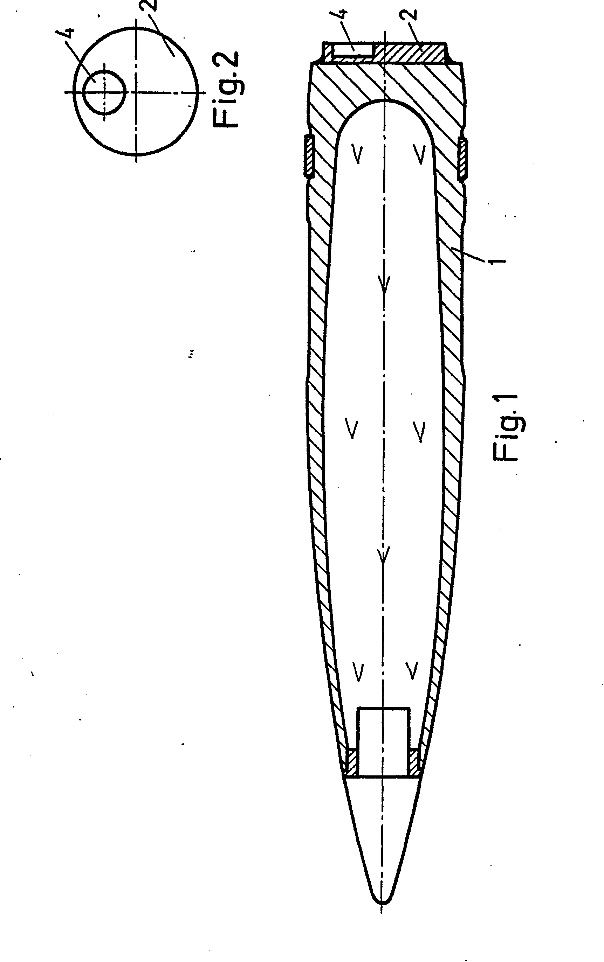

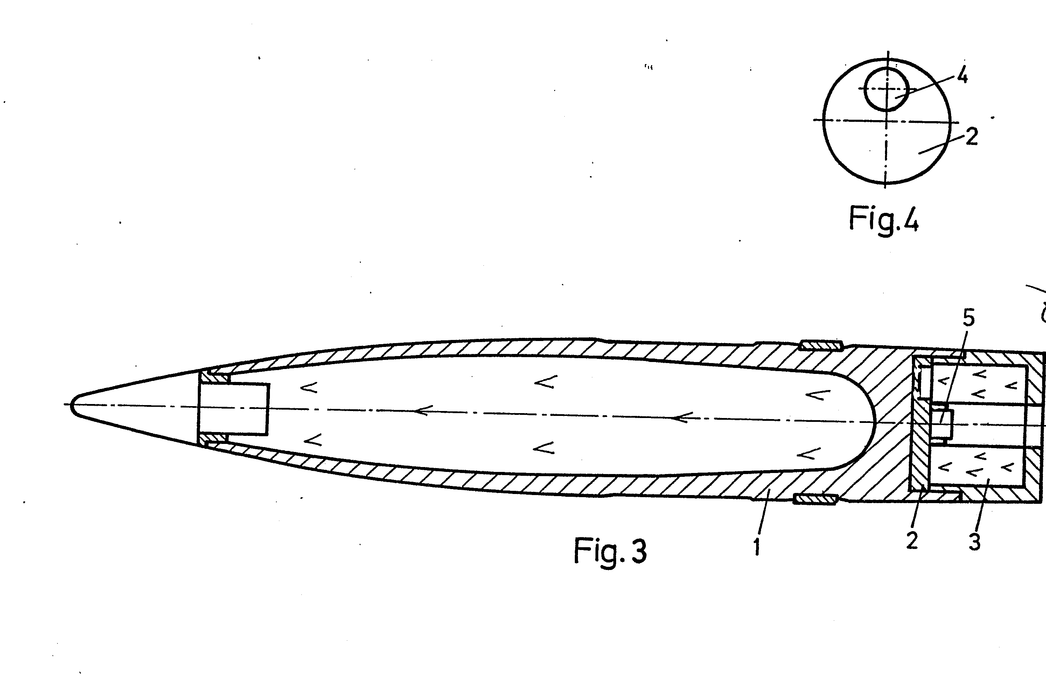

When the shell is balanced, it is rotated recumbent on its cylindrical outer surface in the roller stays of a balancing machine. The balancing machine may be of per se known type and will not, therefore, be described in detail here. The imbalance, if any, is measured, whereafter the shell is weighed. A suitable weight and mass eccentricity for the shell 1 are calculated. A suitable adjustment washer 2 is selected from a set of calibrated washers of different weights and mass eccentricities and is mounted at the right angle about the longitudinal axis of the shell in a prepared place. A suitable place is retracted from the periphery of the rear plane of the shell, as shown in Fig. 1, where no disturbance can be affected to the ballistic flight and aerodynamic properties of the shell. Other suitable positions are within a tracer cartridge, as shown in Fig. 3, or in a tail fin if such is disposed on the shell.

The different mass eccentricities of the adjustment washers are realized by means of recesses 4 which may either be open or be filled with a suitable light material. The adjustment washers can be welded in place on the rear plane of the shell. In Fig. 3, the adjustment washer performs the dual function of adjustment and maintaining the igniter 5 of the tracer cartridge. The adjustment washer may also serve as a drive band.

in air resistance between different shells for the purposes of increasing hit probability, characterized in that the shell (1) includes an adjustment weight (1) located on one side of the point of gravity of the shell seen in its longitudinal direction, preferably in the rear region of the shell, for parallel setting of the main axis of inertia of the shell and the geometric axis of the shell casing.

7. The apparatus as claimed in Claim 6, characterized in that the adjustment weight consists of a washer (2) mounted on the rear plane of the shell.

8. The apparatus as claimed in Claim 6, characterized in that the adjustment weight consists of a washer (1) disposed in the tracer cartridge (3) of the shell so that it may simultaneously constitute a retainer means for the igniter (5) of the tracer cartridge.

9. The apparatus as claimed as in Claim 7 or 8, characterized in that the adjustment washer (2) is provided with an eccentric recess (4) which determines the mass and mass eccentricity of the washer.

0246205

1/2

**Fig.2**

**Fig.1**

2/2

Fig.4

Fig.3

**European Patent Office**

## EUROPEAN SEARCH REPORT

Application number

EP 87 85 0028

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A- 507 795 (HUGUENARD) * Whole document * | 1-9 | F 42 B 13/02 |
| Y | FR-A-1 255 525 (SOCIETE TECHNIQUE DE RECHERCHES INDUSTRIELLES ET MECANIQUES) * Page 1, left-hand column, paragraph 3; page 1, right-hand column, paragraphs 2-7; page 2, left-hand column, paragraph 1; page 2, right-hand column, paragraph 2; figures 1,2 * | 1-9 | |
| Y | FR-A- 748 006 (HOTCHKISS) * Page 2, lines 9-17,73-81; figures 1-8 * | 1-9 | |
| A | EP-A-0 154 762 (SIMMEL) * Page 4, lines 18-31; page 5, lines 1-27; figures 1-6 * | 2,5,7, 9 | TECHNICAL FIELDS SEARCHED (Int. Cl.4) F 42 B |
| A | FR-A- 776 162 (SKODA) | | |
| A | GB-A- 11 425 (SMALLWOOD)(A.D. 1915) | | |

The present search report has been drawn up for all claims

| Place of search | Date of completion of the search | Examiner |
|---|---|---|
| THE HAGUE | 31-08-1987 | VAN DER PLAS J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82